# EUROPEAN PATENT SPECIFICATION

(11) **EP 4 325 794 B1**
(45) Date of publication and mention of the grant of the patent: **10.09.2025**
(21) Application number: 22190721.5
(22) Date of filing: 17.08.2022
(51) Int. Cl.: H04L 41/0833, H04L 41/40, G06F 9/455, G06F 1/3234, G06F 1/32, G06F 8/41

(54) **POWER MANAGEMENT COMPONENT AND METHOD FOR POWER MANAGEMENT OF A VIRTUAL NETWORK FUNCTION**
LEISTUNGSVERWALTUNGSKOMPONENTE UND VERFAHREN ZUR LEISTUNGSVERWALTUNG EINER VIRTUELLEN NETZWERKFUNKTION
COMPOSANT DE GESTION D'ÉNERGIE ET PROCÉDÉ DE GESTION D'ÉNERGIE D'UNE FONCTION DE RÉSEAU VIRTUEL

(43) Date of publication of application: 21.02.2024
(73) Proprietor: NTT DOCOMO, INC., Chiyoda-Ku Tokyo 100-6150 (JP)
(72) Inventor: KATSALIS, Kostas, 80687 Munich (DE); TRIAY MARQUES, Joan, 80687 Munich (DE); TANIGUCHI, Kosuke, Tokyo, 100-6150 (JP); KUNO, Yuya, Tokyo, 100-6150 (JP)
(74) Representative: Viering, Jentschura & Partner mbB Patent- und Rechtsanwälte

(56) References cited:
- EP-A1- 3 179 673
- SHUGUANG QI CAICT CHINA: "Recommendation ITU-T L.GAL2 - Interface for power management in NFV environments "Green Abstraction Layer 2";TD-GEN-0460", vol. 6/5, 6 March 2018 (2018-03-06), pages 1 - 20, XP044240705, Retrieved from the Internet <URL:https://www.itu.int/ifa/t/2017/sg5/docs/180305/td/ties/gen/T17-SG05-180305-TD-GEN-0460!!MSW-E.docx> [retrieved on 20180306]
- "Environmental Engineering (EE); Green Abstraction Layer (GAL); Power management capabilities of the future energy telecommunication fixed network nodes. Enhanced Interface for power management in Network Function Virtualization (NFV) environments", vol. TG EE EEPS EE Eco Environmental Product Standards, no. V0.0.4, 29 May 2018 (2018-05-29), pages 1 - 22, XP014312594, Retrieved from the Internet <URL:docbox.etsi.org/EE/EE-EEPS/70-Draft/EEPS22/EE-EEPS22v004.doc> [retrieved on 20180529]

## Description

The present disclosure relates to power management components and method for power management of a virtual network function.

In communication systems, like in many technical systems, it is desirable to consume as little electric power as possible. This in particular relates to virtual network functions of communication systems, which include multiple "layers", namely physical resources, virtual resources (i.e. virtualization containers) and the actual application (i.e. the actual network function). All of these layers have an impact on the power consumption offering, on the one hand, many degrees of freedom for power management but making optimal power management for virtual network functions, on the other hand, complex. Approaches which allow optimizing power consumption effectively for virtual network functions are therefore desirable.

Prior art document SHUGUANG QI CAICT CHINA: "Recommendation ITU-T L.GAL2 - Interface for power management in NFV environments "Green Abstraction Layer 2";TD-GEN-0460",ITU-T DRAFT; STUDY PERIOD 2017-2020; STUDY GROUP 5; SERIES TD-GEN-0460, INTERNATIONAL TELECOMMUNICATION UNION, GENEVA ; CH,vol. 6/5 6 March 2018 (2018-03-06), pages 1-20, XP044240705, discloses an EAS, Energy Aware State, which is an operational power profile mode implemented by the VNF and can be configured by control plane processes.

Prior art document "Environmental Engineering (EE); Green Abstraction Layer (GAL); Power management capabilities of the future energy telecommunication fixed network nodes. Enhanced Interface for power management in Network Function Virtualization (NFV) environments",ETSI DRAFT SPECIFICATION; 203 237, EUROPEAN TELECOMMUNICATIONS STANDARDS INSTITUTE (ETSI), 650, ROUTE DES LUCIOLES ; F-06921 SOPHIA-ANTIPOLIS ; FRANCE,vol. TG EE EEPS EE Eco Environmental Product Standards, no. V0.0.4 29 May 2018 (2018-05-29), pages 1-22, XP014312594, discloses an enhanced interface for power management in NFV environments.

According to one embodiment, a power management component is provided according to independent claim 1. A related method is provided in independent claim 13.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a mobile radio communication system.
- Figure 2: shows an architecture including a Network Functions Virtualisation Management and Orchestration (NFV-MANO) Architectural Framework.
- Figure 3: illustrates the addition of a VNF power manager to VNF generic OAM (Operation, Administration and Maintenance) functions according to an embodiment.
- Figure 4: shows two VNFs operating on top of virtualization containers.
- Figure 5: shows a state diagram for a VNF (power) state machine.
- Figure 6: illustrates VNF operation state information of a VNF in normal operation mode, followed by VNF operation state information of the VNF after entering into sleep mode, followed by VNF operation state information of the VNF in normal operation mode.
- Figure 7: shows a deployment of a VNF by means of two VNF components belonging to one VNF and deployed in a distributed manner.
- Figure 8: shows a flow diagram for VNF configuration with respect to power management.
- Figure 9: shows a flow diagram illustrating a method for registering a VNF for power management.
- Figure 10: shows a flow diagram illustrating a method for setting a VNF into sleep mode.
- Figure 11: shows a flow diagram illustrating a method for restoring a VNF from sleep mode back to normal operation mode power management.
- Figure 12: shows a power management component according to an embodiment.
- Figure 13: shows a flow diagram illustrating a method for power management of a virtual network function.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects. The invention is defined in the independent claims as appended. Advantageous features are set out in the dependent claims.
- an amount of physical data processing resources to be used by the virtual network function in the power state
- an amount of virtualization containers (VMs and OS containers) deployed on the physical resources to be used by the virtual network function in the power state
- a service capacity of a network function running on the virtualization containers to be provided in the power state,
selecting one of the power states for the virtual network function and controlling the virtual network function to operate according to the power saving profile stored for the selected power state.

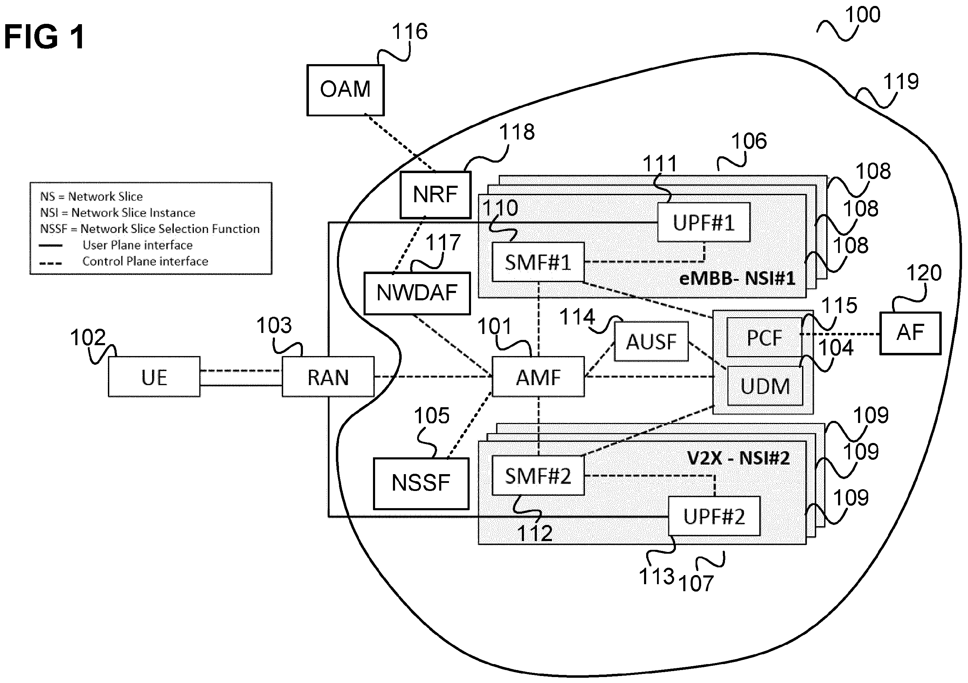

Figure 1 shows a mobile radio communication system 100, for example configured according to 5G (Fifth Generation) as specified by 3GPP (Third Generation Partnership Project).

The mobile radio communication system 100 includes a mobile radio terminal device 102 such as a UE (user equipment), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or another mobile radio communication standard (e.g. non-3GPP accesses like Wi-Fi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 119 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 119 further includes an AUSF (Authentication Server Function) 114, a PCF (Policy Control Function) 115 and an AF (application function) 120.

The core network 119 may have multiple core network slices 106, 107 and for each core network slice 106, 107, the operator (also referred to MNO for Mobile Network Operator) may create multiple core network slice instances 108, 109. For example, the core network 119 includes a first core network slice 106 with three core network slice instances (C-NSIs) 108 for providing Enhanced Mobile Broadband (eMBB) and a second core network slice 107 with three core network slice instances (NSIs) 109 for providing Vehicle-to-Everything (V2X).

Typically, when a core network slice is deployed (i.e. created), network functions (NFs) are instantiated, or (if already instantiated) referenced to form a core network slice instance and network functions that belong to a core network slice instance are configured with a core network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

The RAN 103 and the core network 119 form the network side of the mobile radio communication system, or, in other words, form the mobile radio communication network. The mobile radio communication network and the mobile terminals accessing the mobile radio communication network form, together, the mobile radio communication system.

Like the core network 119, the RAN 103 may also be sliced, i.e. include multiple RAN slices. A RAN slice and a core network slice 106, 107 may be grouped to form a network slice.

In the following, "network slice" (or just "slice") generally refers to a core network slice but may also include a RAN slice or even a Transport network slice.

The mobile radio communication system 100 may further include an OAM (Operation, Administration and Maintenance) function (or entity) 116, e.g. implemented by one or more OAM servers which is connected to the RAN 103 and the core network 119 (connections are not shown for simplicity). The OAM 116 may include an MDAS (Management Data Analytics Service). The MDAS may for example provide an analytics report regarding network slice instance load. Various factors may impact the network slice instance load, e.g. number of UEs accessing the network, number of QoS flows, the resource utilizations of different NFs which are related with the network slice instance.

Further, the core network 118 includes an NRF (Network Repository Function).

The core network 119 may further include a Network Data Analytics Function (NWDAF) 117. The NWDAF is responsible for providing network analytics and/or prediction information upon request from network functions.

The various network functions can be implemented on special hardware, i.e. on so-called ACTA (Advanced Telecommunications Computing Architecture) devices. This means that the network functions are implemented as physical network functions deployed on special hardware. The software for implementing the network function is strongly coupled with the hardware.

However, it may be desirable to implement network functions also on non-special hardware, i.e. as software applications running on virtual machines (and/or containers) deployed over COTS (Commercial off-the-shelf) servers (i.e. on general purpose or open computing platforms, i.e. devices). This is enabled by using virtualization technology (e.g. hypervisor, operating system (OS) containers etc.) network functions (e.g., SMF, PCF etc.) can be deployed in virtual machines (VMs having one or more vCPUs) and/or (operation system (OS)) containers (containers can be seen as "lightweight" VMs). They are then referred to as virtual network functions (VNFs). VMs and OS containers are herein referred to by the general term "virtualization containers".

Network Function Virtualization Management and orchestration (NFV-MANO) is a key element of the ETSI (European Telecommunications Standards Institute) network functions virtualization (NFV) architecture. MANO is an architectural framework that coordinates network resources for cloud-based applications and the lifecycle management of virtual network functions (VNFs) and network services. As such, it is crucial for ensuring rapid, reliable NFV deployments at scale. MANO includes, among others, the NFV orchestrator (NFVO), the VNF manager (VNFM), and the virtual infrastructure manager (VIM).

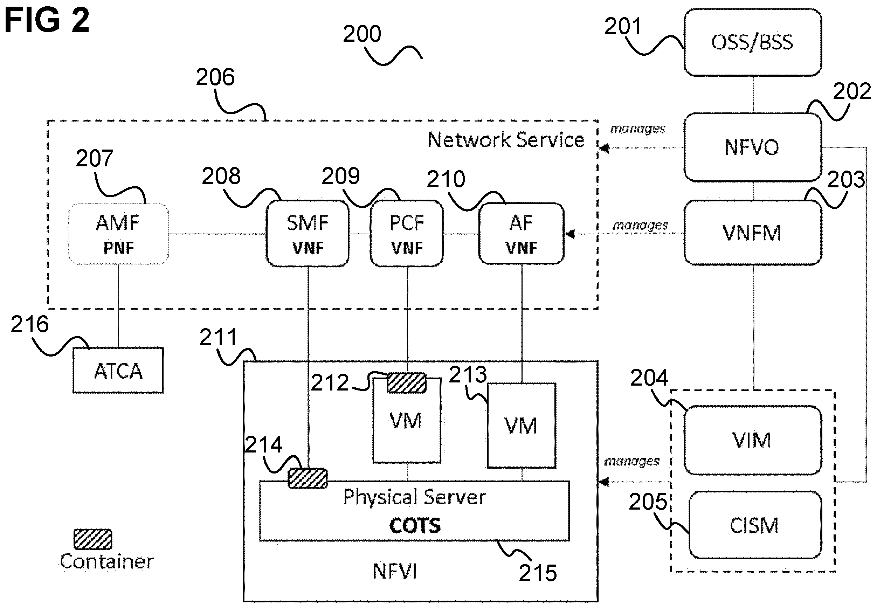

Figure 2 illustrates an OSS/BSS (operations support system and business support system) 201 and a simplified version of the Network Functions Virtualisation Management and Orchestration (NFV-MANO) Architectural Framework. This includes a collection of functional blocks and functions, data repositories used by these functional blocks, and reference points and interfaces through which these functional blocks exchange information for the purpose of managing and orchestrating NFV.

Specifically, MANO includes an NFVO 202, an VNFM 203, a VIM 204 and CISM (container Infrastructure Service Management) 205. In the following, it is assumed that the CISM 205 is part of the VIM 204 so reference is only made to the VIM 204 (i.e. VIM 204 and CISM 205 are summarized as indicated by the dashed line and referred to by VIM 204).

The NFVO 202 manages a network service (NS) 206 which, in this example, includes an AMF 207, an SMF 208, a PCF 209 and an AF 210. A network service (NS) is a composition of network function(s) and/or service(s), defined by its functional and behavioural specification.

The architecture 200 further includes an NFVI 211 which includes hardware and software components that build up the environment in which VNFs are deployed.

In this example, the SMF 208, the PCF 209 and the AF 210 are implemented as VNFs, i.e. as NFs that can be deployed on the NFVI 211. The PCF 209 is implemented by a container 212 running in a virtual machine, the AF 210 on a virtual machine 213 and the SMF 208 in a container 214, all running on a COTS server 215. The AMF 207, in contrast, is implemented on an ATCA device 216, i.e. is a physical network function.

The NFVO 202 manages the NS lifecycle and coordinates the management of NS lifecycle, VNF lifecycle (supported by the VNFM 203) and NFVI resources (supported by the VIM 204) to ensure an optimized allocation of the necessary resources and connectivity.

The VNFM 203 is responsible for the lifecycle management of VNFs.

The VIM 204 is a functional block that is responsible for controlling and managing the NFVI compute, storage and network resources, typically within one operator's infrastructure domain.

It should be noted that the network functionality according to 3GPP is responsible for the management and configuration of the Network Functions (NFs) and interactions between NFs while it is not responsible for the management of the virtual network function aspects. In fact, the 3GPP functionality is not even aware whether a network function is virtualized or not. From ETSI NFV-MANO perspective it is irrelevant which is the actual NF that is "hosted" inside the VNF.

The 3GPP network functionality (element managers in communication with an OSS manages the network functions and the NFV-MANO (also in communication with the OSS) manages the VNFs which implement (i.e. host) them.

From NFV-MANO perspective VNF management (life cycle management (LCM) such as establishment, update and release) is made by NFV-MANO (specifically the VNFM) and its configuration by an element manager.

For saving power, e.g. in an O-RAN based deployment when VNFs are managed by NFV-MANO, power management may be performed as follows: a pre-condition is that NFs (e.g. distributed units (DUs)) are registered with the OSS and radio usage is reported every 1 minute from RU (radio hardware unit) to DU. A decision to enter sleep mode is taken based on radio usage (e.g. by a Non-RT-RIC (non-real time RAN intelligent controller) or MDAF (Management Data Analytics Function) in the MANO or the VNF power manager VNF generic OAM function or through their interaction): the network function to be dropped (i.e. to go to sleep mode) is determined by comparing RB (resource block) usage rate, overlay information, sleep mode target cell (etc.). It should be noted that in O-RAN, the RIC determines which NF to turn off, and cooperates with the NFV-MANO to turn off the power to the NFVI (compute/NW equipment) or stop the VM.

According to various embodiments, an approach for power management of VNFs is provided which considers the special characteristics that constitute a VNF (i.e. jointly considering physical and virtual resources, application and/or VNF LCM, i.e. jointly considering VNF power management (application and virtual resources) and underlying physical power management). So, according to various embodiment, in other words, power management is considered from a VNF perspective (rather than, e.g., purely from a radio resource (e.g. RB) perspective). In particular, it includes definition of various power modes (including in particular a sleep mode) of a VNF and includes state transitions between these power modes (e.g. between a VNF operational status and a VNF sleep mode) and a process to manage the VNF in terms of power management and introduces functionality to perform VNF power management which is responsible to restore VNF operational state after any power state transition. According to various embodiments, interactions with regard to power management are not only enabled with NFV-MANO and OSS but also with all services offered by the VNF generic OAM functions framework.

In particular, according to various embodiments, VNF power management profiles are established to enable power management at a VNF level considering the disaggregation between physical and software introduced by the virtualization layer. The VNF power management profiles indicate how VMs, applications (i.e. the provided network function) and the physical resources are affected by a power state transition.

Further, according to various embodiments, a mechanism for (operational) state restoration is provided that allows maintaining a VNF's runtime information during sleep mode (and recovering it when exiting sleep mode). This state information for example includes VNF identification information, configuration information inside the VNF/virtualization container and NFV-MANO managed objects information during power state transitions of the VNF. Further, it is enabled that a VNF to be restored from a low power mode recovers the necessary computational, storage and/or network resources and the correct power state, without affecting peer entities during the state transition process.

According to various embodiments, capabilities of power management offered by infrastructure and the management and orchestration system as the elements that are subject to power consumption (physical operation) are leveraged. Further, according to various embodiments, the management and orchestration system (e.g., NFV-MANO) is used to assists in keeping track of the original managed object information and configuration.

According to various embodiments, the above mechanisms, processes and functionalities are provided by means of a power management component, referred to as VNF power manager (VNF-PoMF) in the following.

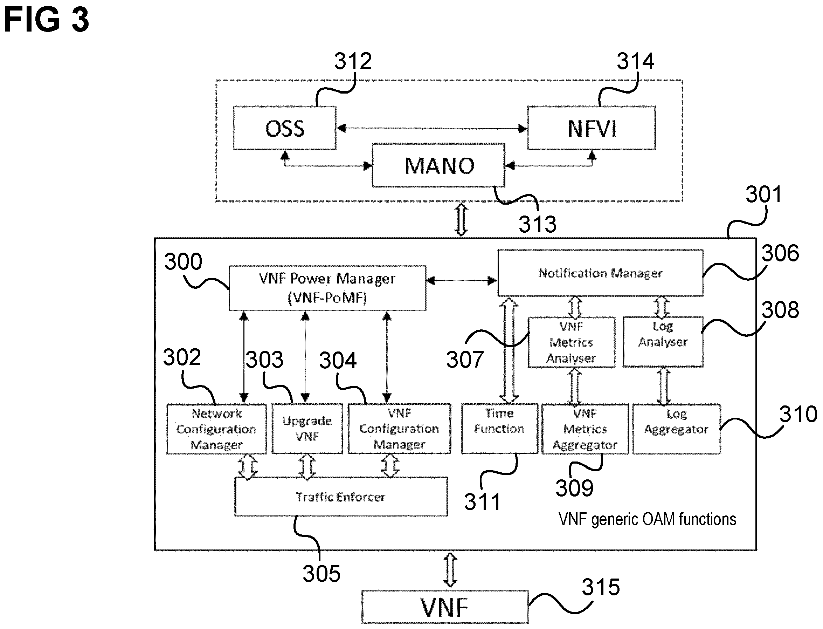

This power management component may for example be introduced into the VNF generic OAM functions framework and can interact with a number of VNFs (possibly without considering interactions with NFV-MANO) as illustrated in figure 3.

Figure 3 illustrates the addition of a VNF power manager 300 within the VFN generic OAM functions 301 framework according to an embodiment.

The VNF generic OAM functions 301 include, as an example, a network configuration manager 302, an VNF upgrade function 303 and a VNF configuration manager 304, connected to a traffic enforcer 305. The VNF generic OAM functions 301 further includes a notification manager 306 connected to a metric analyser 307 and a log analyser 308 which exchange information with a metrics aggregator 309 and a log aggregator 310, respectively. The notification manager 306 is further connected to a time function 311 of the VNF generic OAM functions 301. Different interactions between VNF generic OAM functions are also possible.

The VNF generic OAM functions 301 (and in particular the VNF power manager 300) are connected to (interconnected) virtualization-related components including an OSS 312, a MANO 313 (i.e. an arrangement including, for example, NFVO, VNFM and VIM) and an NFVI 314 as described with reference to figure 2.

The VNF generic OAM functions 301 are further in communication with a plurality of VNFs 315 (only one of which is shown for simplicity). In the following, reference is made to the VNF power manager 300 but the functionalities, mechanisms and processes described with respect to it may also be performed by a power management component or power management component arranged somewhere else within the architecture (i.e. not necessarily as part of the VNF generic OAM functions framework; for example, a virtualization (e.g. NFV) management and orchestration system may manage and control the power states of a VNF).

The VNF power manager 300 has one or more of the following functionalities:
- Compiling VNF power profiles (these can be also provided by NFV-MANO 313. For example VNF power profiles can be described in the descriptors used to deploy and manage the VNF.).
- Collecting VNF-related power information by processing power consumption information acquired from the infrastructure (or its corresponding management systems).
- Collecting information about power profiles for each VNF 315 and associating it with actual VNF composition and computational, storage and/or network resource (physical and virtual) usage.
- Managing all states related to VNF power modes (sleep, resume, etc.) and executing related state transitions.
- Solving dependencies with other VNFs when performing the power management on a VNF (sleeping/resuming).
- Preserving and restoring operational and configuration state for the VNF (config, operational data, correct power state) after power management operations have been performed.

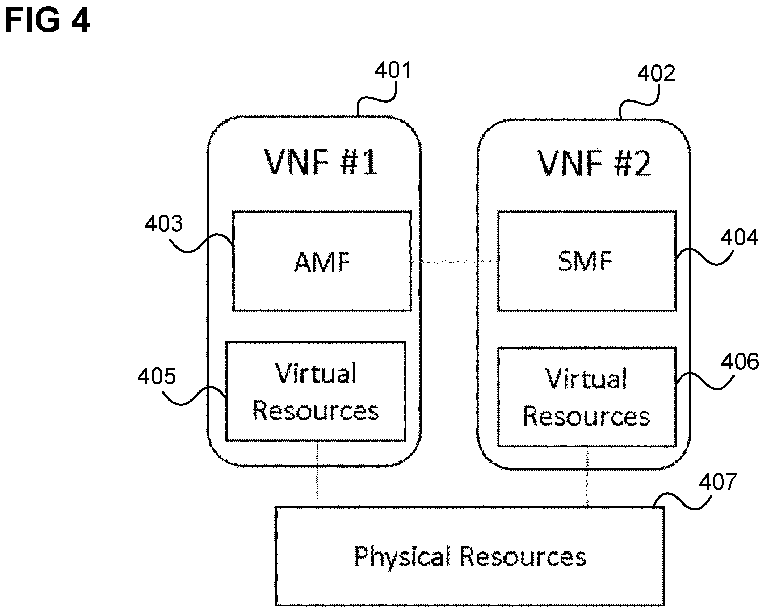

A VNF power profile relates to usage of an application, virtual resources and physical resources. This is described in more detail in the following with reference to figure 4.

Figure 4 shows a first VNF 401 and a second VNF 402, e.g. including a respective application (here the first VNF 401 hosts an AMF 403 and the second VNF hosts an SMF 404, which are connected) and respective virtual resources 405, 406, provided by physical resources (here by the same physical resources 407, but these may be also separate, e.g. separate computers).

Each power state for each VNF 401, 402 is associated with a respective VNF power profile. A VNF power profile considers, as an example,
- the relationship of applications to virtualised resources and physical resources.
- the composition of virtualised resources and their capabilities/capacity.
- the deployment flavours of the VNF.
- VNF power policies provided by a management system.

Further, VNF power profiles are tuned by a management and orchestration system entity to compute exact power consumption based on various metrics (e.g., application KPI, infrastructure resource power consumption, etc.). With the tuned profiles, the entity responsible for the power management of the VNF (e.g. VNF power manager 300) can perform a more accurate power consumption calculation.

### Table 1 gives an example of VNF power profile (e.g. for the first VNF 401).

**Table 1**

| **VNF power profile** | **Power consumption factor (wrt normal)** | **Estimated power consumption (in Watts)** | **VNF flavour(s) according to VNFD** | **Virtual Resources composition (simple example)** | **Application aspects OS level and Application level (threads, number of sessions etc.)** |
|---|---|---|---|---|---|
| Normal mode | 1.0 | 12 | VNF_flavour_1, VNF_flavour_2 | 10 VNFC, 20 vCPU, 10 GB memory 10 ports 1 GB, etc. | 50 threads |
| Sleep mode | 0.2 | 3 | VNF_flavour_3 | 1 VNFC, 2 vCPU, 2 GB memory 1 port 1 GB, etc. | 50 threads |
| High-power mode | 1.5 | 25 | VNF_flavour_4 | 10 VNFC, 40 vCPU, 20 GB memory 10 ports 10 GB, etc. | 100 threads |
| Low-power mode | 0.5 | 5 | VNF_flavour_5 | 2 VNFC, 2 vCPU, 2 GB memory 2 port 1 GB, etc. | 10 threads |

Each power state profile of the above examples may also indicate that the physical infrastructure is not affected.

The second VNF 402 may have a different power profile than the first VNF 401. In particular, sleep modes can be different for different VNFs.

For example, the profiles of the first VNF 401 and the second VNF 402 are defined such that
- when the VNF 401 enters sleep mode (e.g. from normal operation mode)
   ▪ 100 threads are reduced to 10 threads on application level
   ▪ 10 vCPS will decrease to 1vCPU on virtual resource level
   ▪ a physical node can be shut down on physical resource level
- and when the VNF 402 enters sleep mode (e.g. from normal operation mode)
   ▪ 10000 sessions are reduced to 100 sessions on application level
   ▪ A VM is stopped on virtual resource level
   ▪ CPU clock frequency is reduced from 10GHz to 1GHz on physical resource level

It should be noted that the actual power consumption may differ between application level in sleep mode and application in operation mode (e.g. providing more sessions or in general providing a higher service capacity) even if allocated virtual resources and allocated physical resources are the same.

The VNF power manager 300 may for example include
- a VNF power profile manager which compiles and updates the VNF power profiles
- a VNF power metrics analyzer which analyzes the related VNF power metrics, derives estimations etc.
- a VNF power policies manager which receives and analyzes VNF power policies and
- a VNF Power State Controller which manages the VNF power state machine and the transition between states.

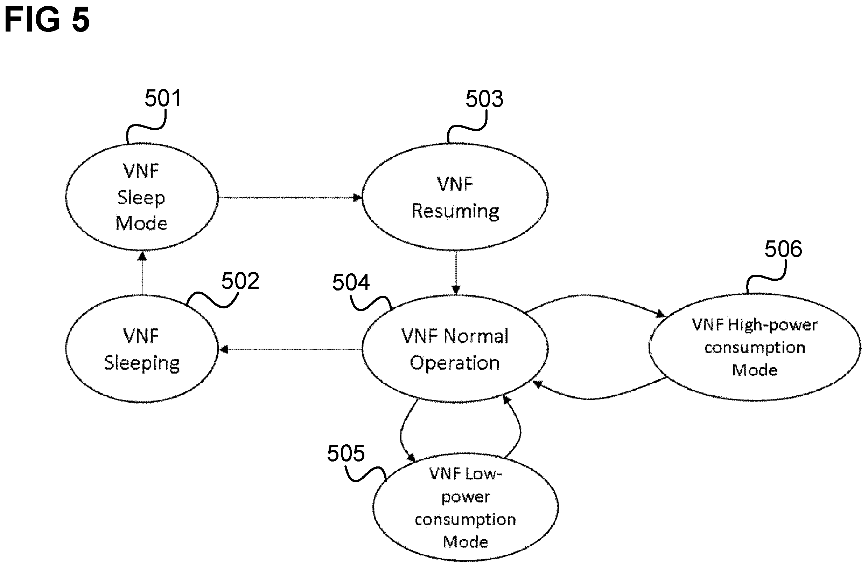

Figure 5 shows a state diagram for a VNF (power) state machine.

In this example, the VNF has a sleep mode state 501, a sleeping (i.e. going to sleep) state 502, a resuming state 503, a normal operation state 504, a low-power consumption mode state 505 and a high-power consumption mode state 506.

The sleeping mode state 502 may be a low-power consumption mode that is an intermediate state before sleep mode 501 (which is the "lowest-power consumption mode").

The VNF power manager 300 uses the VNF power profile established for a VNF to determine VNF power states and the state transitions supported for the VNF. The VNF power profile provides information which the VNF power manager 300 may use to determine the power consumption of the VNF and trigger transitions between states.

The VNF power manager 300 (e.g. the VNF power state controller) can for example autonomously decide whether a state change is needed.

Each power state, as explained above with reference to the power state profiles, relates to a level of utilization on the application level, the virtual resource level and the physical resource level. In particular, the definition of the sleep mode 501 considers all aspects which can affect power consumption of the VNF as a whole. So, sleep mode 501 can be seen to combine a SW (software) sleep mode and a HW (hardware) sleep mode into a single framework. For this, interactions between both may be modelled to achieve both targets.

The VNF sleep mode essentially combines a SW sleep mode and a HW sleep mode. Entering SW sleep mode includes modifying the composition of software modules composing the VNF application into a minimum subset and/or performing a partial termination of certain software components demanding less power.

Entering HW Sleep Mode includes modifying the power state of the underlying physical infrastructure resources (e.g., compute) or changing certain configurations (e.g., network equipment).

Further, as mentioned above, setting the VNF sleep mode considers how, after returning from VNF sleep mode 501 to normal operation mode 504, the VNF recovers relevant configuration. For instance, for a virtualized DU (vDU) or vDU component, the cell configuration and topology needed are maintained during VNF sleep mode 501 to recover it when returning to normal mode. Examples of VNF operation state information that is maintained and recovered is cell configuration, topology, network configuration and application data.

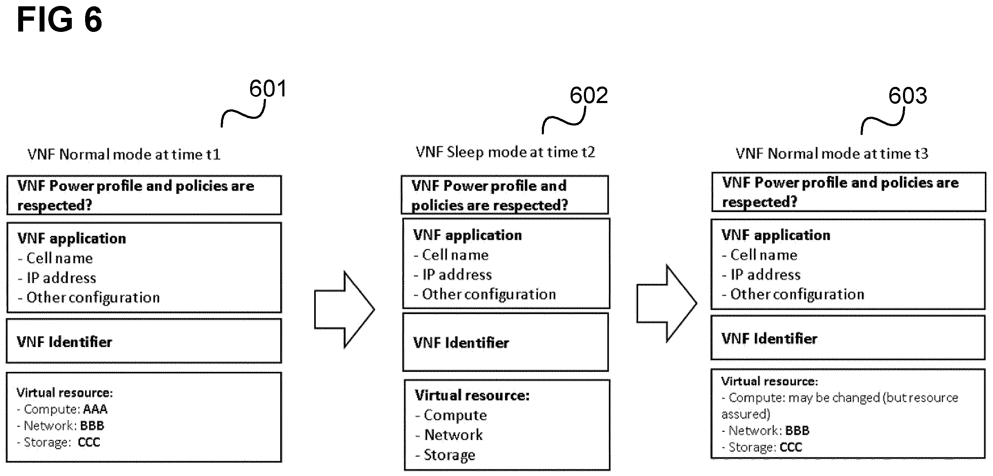

Figure 6 illustrates VNF operation state information 601 of a VNF in normal operation mode, followed by VNF operation state information 602 of the VNF after entering into sleep mode, followed by VNF operation state information 603 of the VNF in normal operation mode (after having left the sleep mode).

As can be seen, during sleep mode, the VNF operation state information 602 may at least partially change with respect to the VNF operation state information 601 of normal operation mode. When re-entering into (i.e. returning to) normal operation, the VNF power manager 300 tries to restore the VNF status (configuration, data etc.). For this, it may use various techniques, for example
- saving configuration and management information in a registry (with timestamps and versioning).
- keeping the VNF configuration data held by the management and orchestration system(s).
- creating VNF or VNFC (VNF component) snapshots, which keep state and configuration data of one or more relevant VNFs or VNFCs and that can be used in restoration procedures.
- performing resource reservation of virtualised and physical resources that would be freed by the partial termination of a VNF (i.e., of a certain VNFC) with the purpose of assuring resources when performing the VNF restoration/back to normal operation mode.
- keeping track of and mapping NFVI resources, so affected resources can be determined, and their power state be changed with respect to the VNF sleeping mode.
- VNF restoration and (partial) VNF re-instantiation events: VM is recreated and associated with the following:
   ▪ The restored VNF/MANO managed object succeeds the previous MANO managed object states and
   ▪ (optionally) uses reserved NFVI resources.

The VNF power manager 300 may then check whether the VNF operation state information recovery has been achieved. It should be noted that the VNF power manager 300 only restores the configuration of the VNF when setting the VNF to a (selected) power state insofar as the power profile of the selected power state allows it. If for example, the VNF was first in a high-power consumption mode, then in sleep mode and should now be put into normal operation, it may not be possible to fully restore the VNF's configuration since this might not respect the power profile of normal operation.

As mentioned above, a distributed deployment of a VNF may be considered in the power management, in particular in an VNF power state profile.

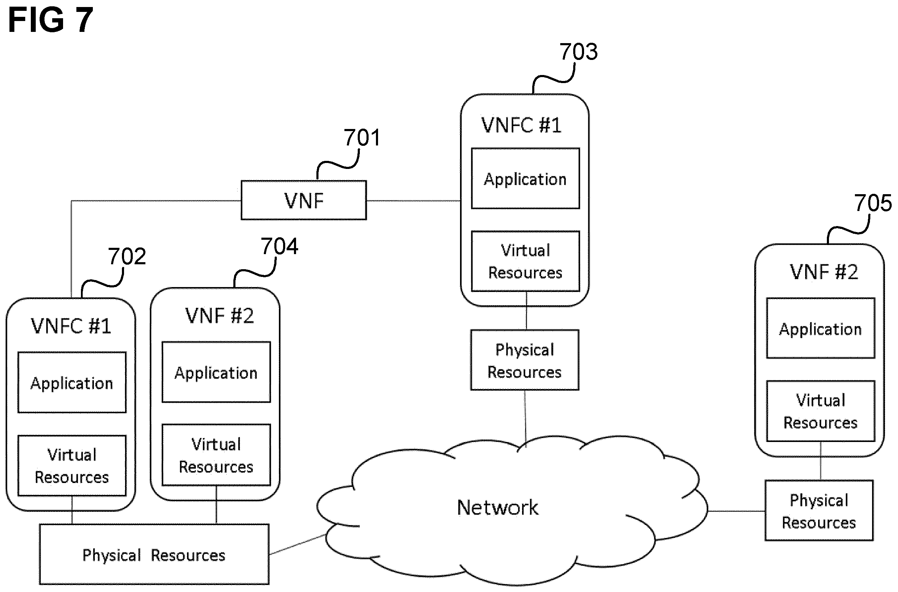

Figure 7 shows a deployment of a VNF 701 in a distributed manner by means of two VNF components 702, 703 in addition to two VNFs 704, 705 which are, in contrast, deployed in non-distributed manner.

A Virtualised Network Function Component (VNFC) 702, 703 is an internal component of a VNF providing a VNF provider with a defined sub-set of that VNF's functionality, with the main characteristic that a single instance of this component maps for example 1:1 to a single virtualisation container. The VNF power manager 300 may use (and establish) different VNFC power sub profiles for VNFCs of a VNF (as part of the VNF power state profile).

So, according to various embodiments, the VNF power management (e.g. as implemented by the VNF power manager 300) can one or more of
- use virtualised resources reservation to assure virtualised resources for the VNF power restoration.
- use VNF snapshots to keep and restore VNF state and configuration during the steps of VNF power management.
- use management and orchestration system managed repositories and databases to keep VNF state and configuration.
- use mapping information between VNF application state and configuration, VNF components, and underlying used virtualised and physical infrastructure resources as input for determining the impacted elements in VNF power transitions.
- use own VNF instance storage components to keep VNF state and configuration.
- use of VNF deployment flavours (according to VNF descriptors (VNFDs)) and change VNF flavour operations as a mechanism to change VNF power modes.
- use virtualised resources management capabilities such as start/stop the virtualized resource, changing the power mode of the underlying hosting physical resource for handling VNF power state modification.
- as a dedicated or common VNF generic OAM function, handle power management for a single or multiple VNFs.
- acquire from other management and orchestration systems or from the infrastructure or the VNF relevant power consumption data.
- provide information back to the management and orchestration systems about the VNF power consumption and the applicable power state, so those other systems can further interact with other elements (e.g., NFVI) to perform necessary actions (e.g., change power state of servers, change network equipment configuration, etc.).
- decide autonomously or based on some event to change between states (e.g. enter into VNF sleep mode).

VNF power management may be triggered by a component dedicated to analytics and intelligent control (e.g., RIC in O-RAN, MDAF in NFV-MANO) or a component dedicated to the VNF power management function 300 (e.g., function in VNF generic OAM functions framework 301).

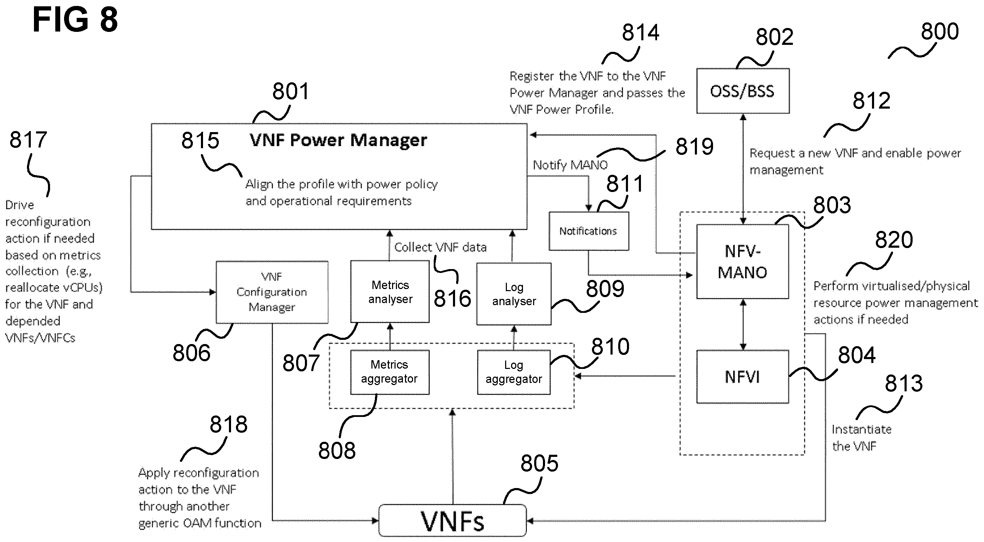

Figure 8 shows a flow diagram 800 for VNF configuration with respect to power management.

Components as described with reference to figure 3 are involved in the flow: a VNF power manager 801, an OSS/BSS 802, an NFV-MANO 803 and an NFVI 804, a VNF 805, a VNF configuration manager 806, a metrics aggregator 808, a metrics analyzer 807, a log aggregator 810, a log analyser 809 and a notification manager 811.

In 812, the OSS/BSS 802 requests provision of a new VNF and enable power management for this VNF.

In 813, the NFV-MANO 803 and NFVI 804 initiate the VNF 805 (in response to the request) using normal procedures.

In 814, the NFV-MANO 803 registers the VNF 805 to the VNF power manager 801 and (if available) passes the VNF power profile for the VNF 805 to the VNF power manager 801. If the VNF power profile is not available from NFV-MANO, the VNF power manager, compiles a VNF power profile for the VNF.

In 815, the VNF power manager 801 aligns the profile with power policy and operational requirements.

In 816, the VNF power manager 801 collects VNF data.

In 817, the VNF power manager 801 performs a reconfiguration action if needed based on metrics collection (e.g., reallocate vCPUs) for the VNF 805 and dependent VNFs or VNFCs and the VNF power profile.

In 818, the VNF power manager 801 applies the reconfiguration action to the VNF 805 through the VNF configuration manager 806.

In 819, the VNF power manager 801 notifies NFV-MANO 803.

In 820, NFV-MANO 803 and NFVI 804 perform virtualized and/or physical resource power management actions if needed.

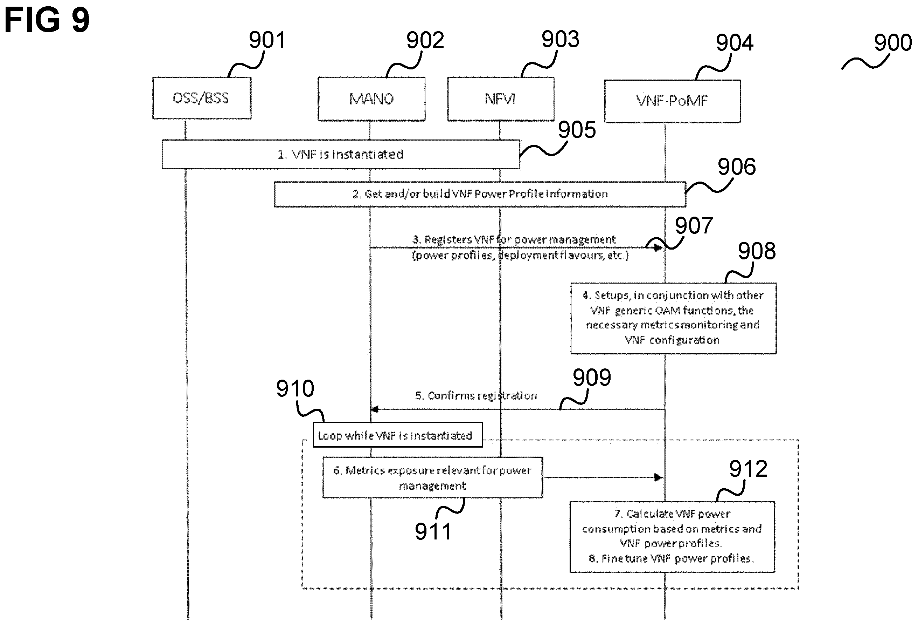

Figure 9 shows a flow diagram 900 illustrating a method for registering a VNF for power management.

An OSS/BSS 901, a NFV-MANO 902, an NFVI 903 and a VNF power manager 904 (e.g. as in figure 3) are involved in the flow.

In 905, a VNF requested by the OSS/BSS 901 is instantiated by the NFV-MANO 902 and the NFVI 903.

In 906, the NFV-MANO 902, the NFVI 903 and the VNF power manager 904 get and/or build VNF power profiles for the VNF. MANO may indicate power profiles for the VNF, e.g., with associated deployment flavours, etc. If the profile is not provided by NFV-MANO, the VNF power manager compiles a VNF power profile for this VNF.

In 907, the NFV-MANO 902 registers the VNF for power management at the VNF power manager for power management.

In 908, the VNF power manager 904 sets up, in conjunction with other VNF generic OAM functions, the necessary metrics for monitoring and VNF configuration.

In 909, the VNF power manager 904 confirms the registration of the VNF.

While the VNF is instantiated, a loop is performed in 910 which includes, in 911 an exposure of metrics relevant for power management by the NFV-MANO 902 and the NFVI 903 to the VNF power manager 904 and, in 912, a calculation of VNF power consumption based on values of the metrics and VNF power profiles as well as a fine tuning of VNF power profiles (i.e. the VNF power manager 904 may adapt a VNF power profile if its power consumption (as shown by the metric values) does not achieve a target power consumption reduction).

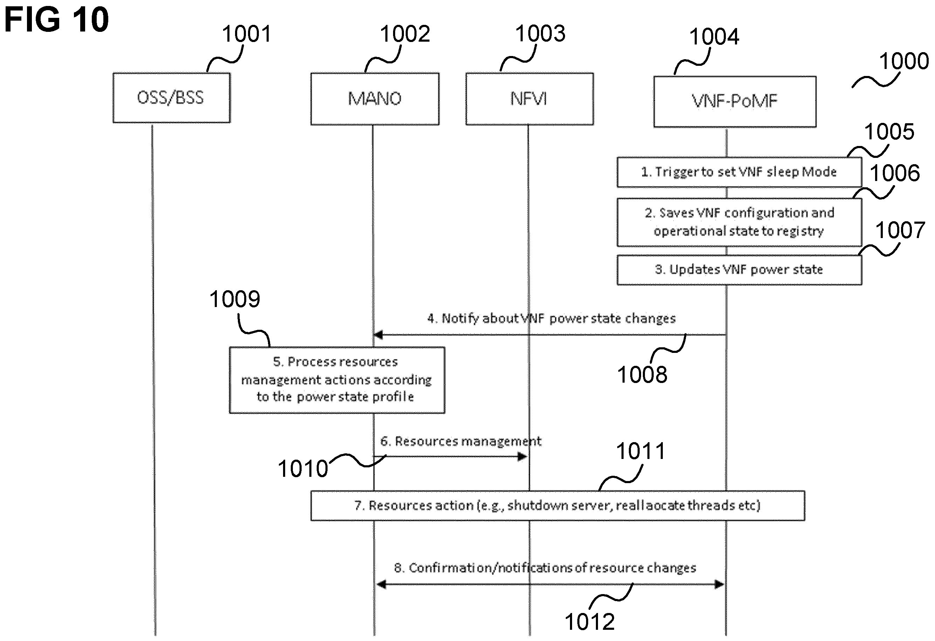

Figure 10 shows a flow diagram 1000 illustrating a method for setting a VNF into sleep mode.

An OSS/BSS 1001, a NFV-MANO 1002, an NFVI 1003 and a VNF power manager 1004 (e.g. as in figure 3) are involved in the flow.

In 1005, the VNF power manager 1004 is triggered to set the VNF to sleep mode (e.g., by a request from the OSS/BSS 1001 or autonomously).

In 1006, the VNF power manager 1004 saves the VNF configuration and operational state (i.e. VNF operation state information) to a registry.

In 1007, the VNF power manager 1004 updates the VNF power state to sleep mode.

In 1008, the VNF power manager 1004 notifies the NFV-MANO 1002 about the VNF power state change.

In 1009, the NFV-MANO 1002 processes resource management actions according to the power state profile of sleep mode and manages resources in 1010 accordingly.

In 1011, the NFV-MANO 1002, the NFVI 1003 and the VNF power manager 1004 perform resource reallocation actions according to the resource management and exchange confirmations and/or notifications about resource changes in 1012.

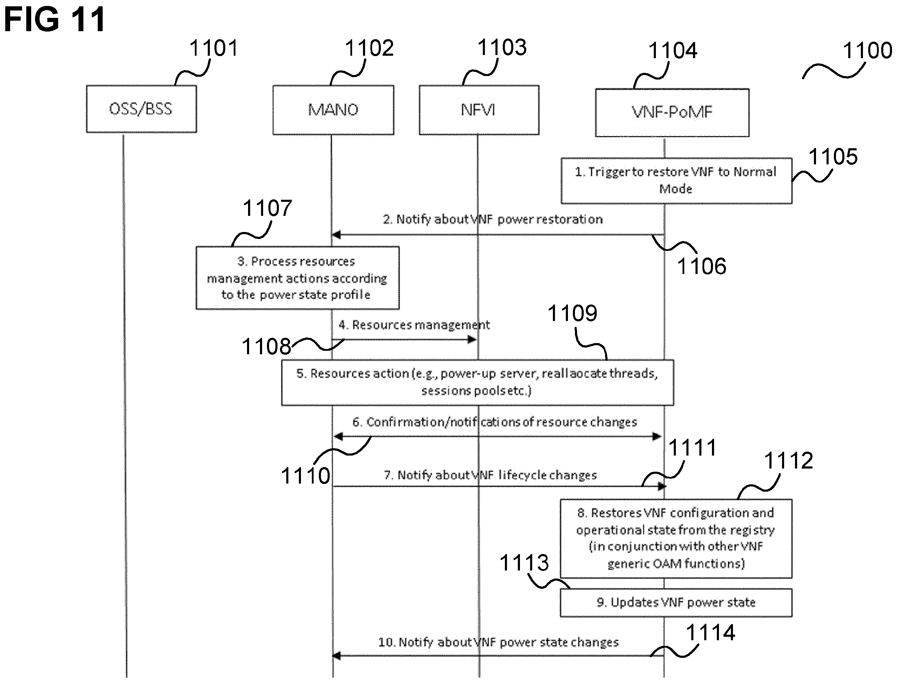

Figure 11 shows a flow diagram 1100 illustrating a method for restoring a VNF from sleep mode back to normal operation mode power management.

An OSS/BSS 1101, a NFV-MANO 1102, an NFVI 1103 and a VNF power manager 1104 (e.g. as in figure 3) are involved in the flow.

In 1105, the VNF power manager 1104 is triggered to set the VNF be restored to normal operation mode (e.g., by a request from the OSS/BSS 1101 or autonomously).

In 1106, the VNF power manager 1104 notifies the NFV-MANO 1102 about the VNF power restoration.

In 1107, the NFV-MANO 1102 processes resource management actions requested by the NF power manager according to the power state profile of normal operation mode and manages resources in 1108 accordingly.

In 1109, the NFV-MANO 1102, the NFVI 1103 and the VNF power manager 1104 perform resource actions according to the resource management and exchange confirmations and/or notifications about resource changes in 1110.

In 1111, the NFV-MANO 1102 informs the VNF power manager 1104 about VNF lifecycle changes.

In 1112, the VNF manager 1104 restores the VNF configuration and operational state from the registry (in conjunction with other VNF generic OAM functions).

In 1113, the VNF manager 1104 updates the VNF power state to normal operation mode and checks if the updated power state is correct and aligned with the profile.

In 1114, the VNF power manager 1104 notifies the NFV-MANO 1104 about the VNF power state change.

The approaches described above, in particular with the architecture of figure 3, may interact with other systems like O-RAN. For example, both the virtualization-related components 312, 313, 314 as well as the VNF power manager 300 may be connected and interact with SMO (Service Management & Orchestrator) and O-Cloud of an O-RAN-based deployment.

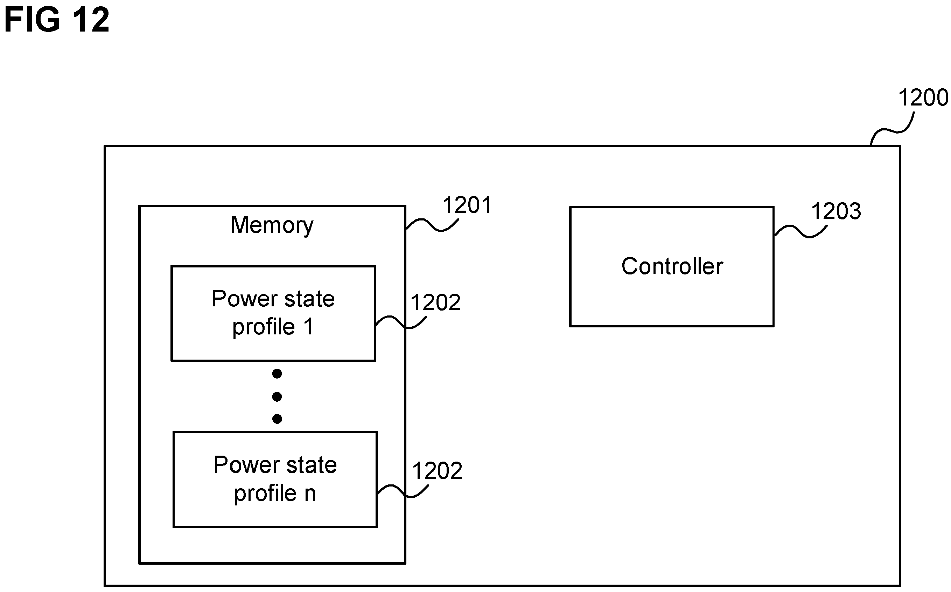

In summary, according to various embodiments, a communication power management component is provided as illustrated in figure 12.

Figure 12 shows a power management component 1200 according to an embodiment.

The power management component includes a memory 1201 configured to store, for a virtual network function, a power saving profile 1202 for each of multiple power states of the virtual network function.

For each power state, the power saving profiles indicates as an example:
- an amount of physical data processing resources to be used by the virtual network function in the power state
- an amount of virtualization containers (VMs and OS containers) deployed on the physical resources to be used by the virtual network function in the power state
- a service capacity of a network function running on the virtualization containers to be provided in the power state.

The power management component 1200 further includes a controller 1203 configured to select one of the power states for the virtual network function and to control the virtual network function to operate according to the power saving profile stored for the selected power state.

According to various embodiments, in other words, power state profiles are established which define the usage (i.e. a rate or ratio or percentage of usage) of each of all three layers (physical resources, virtual resources and application) of a virtual network function. Thus, each power state may be fine-tuned with respect to all three layers.

The approach of figure 12 can be used to reduce power consumption and increase energy efficiency in a virtualized environment. It has many potential use cases (e.g., O-RAN's driven intelligent control) associated to energy efficiency, application of energy consumption policies, etc. and can be implemented in many possible embodiments, including extensions over the VNF generic OAM functions framework. Generic OAM functions are easy pluggable to the implementation. Further, the approach of figure 12 enables flexibility on the way VNF power management can be further simplified and optimized and may be operated over multi-technology VNF environments (VM-based, container-based).

Furthermore, the approach of figure 12, according to various embodiments, enhances the telecom operator orchestration mechanism with methods and/or mechanisms and interfaces which can enable VNF power management and optimize energy efficiency, e.g. as part of an integrated orchestration plane.

The power management component 1200 is a component of a communication network (e.g. of a core network), e.g. a 5G communication system.

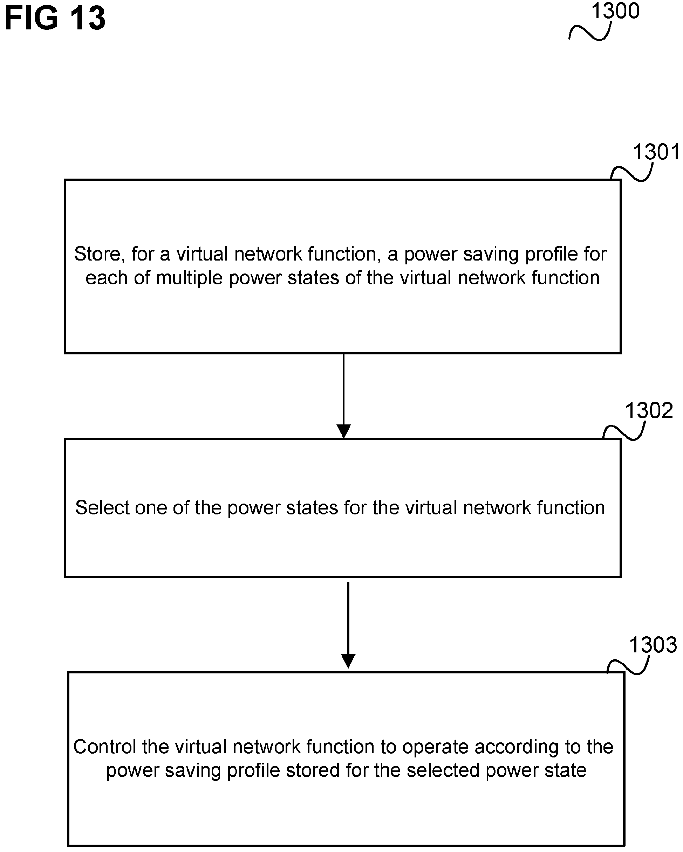

The power management component 1200 for example carries out a method as illustrated in figure 13.

Figure 13 shows a flow diagram 1300 illustrating a method for power management of a virtual network function.

In 1301, for a virtual network function, a power saving profile is stored for each of multiple power states of the virtual network function.

For each power state, the power saving profiles indicates an amount of physical data processing resources to be used by the virtual network function in the power state, an amount of virtualization containers (VMs and OS containers) deployed on the physical resources to be used by the virtual network function in the power state and a service capacity of a network function running on the virtualization containers to be provided in the power state.

In 1302 one of the power states is selected for the virtual network function.

In 1303, the virtual network function is controlled to operate according to the power saving profile stored for the selected power state.

According to various embodiments, for example, a method for optimizing the power management for VNFs is provided, the method including:
- receiving a request for enabling power management for a VNF from a management system
- receiving and exposing and translating information from a VNF/VNFCs about: VNF power status, VNF configuration information, related management and orchestration and resources configuration, VNF application operational status and
   ▪ updating the power management state of VNF
   ▪ preserving isolation between VNF in respect of power management operations
   ▪ assuring resources for later VNF power restoration
- receiving and exposing and translating information from a management system about management and orchestration and resources configuration and
   ▪ conforming against VNF power-aware policies
   ▪ automating VNF configuration and management operations with or without interaction with other management and orchestration systems.

The components of the power management component (in particular the controller, which may be seen to implement any of the various functionalities for the VNF power manager described above, i.e. may be seen as the entity implementing the "logic" of the power management component) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

## Claims

1. A power management component (300, 801, 904, 1004, 1104) comprising:
a memory (1201) configured to store, for a virtual network function (315, 401, 402, 701, 705, 805), a power saving profile (1202) for each of multiple power states (501, 502, 503, 504, 505, 506) of the virtual network function (315, 401, 402, 701, 705, 805),
wherein, for each power state (501, 502, 503, 504, 505, 506), the power saving profiles (1202) indicates
- an amount of physical data processing resources (215) to be used by the virtual network function (315, 401, 402, 701, 705, 805) in the power state (501, 502, 503, 504, 505, 506),
- an amount of virtualization containers (212, 214) deployed on the physical resources (215) to be used by the virtual network function (315, 401, 402, 701, 705, 805) in the power state (501, 502, 503, 504, 505, 506) and
- a service capacity of a network function running on the virtualization containers (212, 214) to be provided in the power state (501, 502, 503, 504, 505, 506); and
a controller (1203) configured
- to select one of the power states (501, 502, 503, 504, 505, 506) for the virtual network function (315, 401, 402, 701, 705, 805), and
- to control the virtual network function (315, 401, 402, 701, 705, 805) to switch from a first power state (501, 502, 503, 504, 505, 506) to a second power state (501, 502, 503, 504, 505, 506), and
- to store operation state information about the virtual network function (315, 401, 402, 701, 705, 805) upon controlling the virtual network function (315, 401, 402, 701, 705, 805) to switch from the first power state (501, 502, 503, 504, 505, 506) to the second power state (501, 502, 503, 504, 505, 506), and
- to configure the virtual network function (315, 401, 402, 701, 705, 805) taking into account the stored operation state information upon controlling the virtual network function (315, 401, 402, 701, 705, 805) to switch from the second power state (501, 502, 503, 504, 505, 506) to a selected power state (501, 502, 503, 504, 505, 506), and
- to control the virtual network function (315, 401, 402, 701, 705, 805) to operate according to the power saving profile (1202) stored for the selected power state (501, 502, 503, 504, 505, 506).

2. The power management component (300, 801, 904, 1004, 1104) of claim 1, comprising an input interface configured to receive information indicating that the power state (501, 502, 503, 504, 505, 506) of the virtual network function (315, 401, 402, 701, 705, 805) should be changed, wherein the controller (1203) is configured to select the one of the power states (501, 502, 503, 504, 505, 506) and controls the virtual network function (315, 401, 402, 701, 705, 805) to operate according to the power saving profile (1202) stored for the selected power state (501, 502, 503, 504, 505, 506) in response to the reception of the information.

3. The power management component (300, 801, 904, 1004, 1104) of claim 2, wherein the information is a request to change the power state (501, 502, 503, 504, 505, 506) from a current state (501, 502, 503, 504, 505, 506).

4. The power management component (300, 801, 904, 1004, 1104) of claim 2 or 3, wherein the information includes information about a power consumption of the virtual network function (315, 401, 402, 701, 705, 805).

5. The power management component (300, 801, 904, 1004, 1104) of any one of claims 1 to 4, wherein each power saving profile (1202) indicates a power consumption of an operation of the virtual network function (315, 401, 402, 701, 705, 805) in accordance with the power saving profile (1202).

6. The power management component (300, 801, 904, 1004, 1104) of any one of claims 1 to 5, wherein each power saving profile (1202) further specifies a number of virtual network function components (702, 704) of the virtual network function (315, 401, 402, 701, 705, 805) to be operated in the power saving profile (1202).

7. The power management component (300, 801, 904, 1004, 1104) of any one of claims 1 to 6, wherein the controller (1203) is configured to determine a power consumption for each of the power saving profiles (1202) based on power consumption measurements.

8. The power management component (300, 801, 904, 1004, 1104) of claim 7, wherein the controller (1203) is configured to include, for each power saving profile (1202), the determined power consumption into the power saving profile (1202).

9. The power management component (300, 801, 904, 1004, 1104) of claim 7 or 8, wherein the power management component (300, 801, 904, 1004, 1104) is configured to select the power state (501, 502, 503, 504, 505, 506) taking into account the determined power consumptions.

10. The power management component (300, 801, 904, 1004, 1104) of claim 1 to 9, wherein the controller (1203) is configured to configure the virtual network function (315, 401, 402, 701, 705, 805) in accordance with the stored operation state information insofar the power saving profile (1202) stored for the selected power state (501, 502, 503, 504, 505, 506) allows it.

11. The power management component (300, 801, 904, 1004, 1104) of claim 1 to 10,
wherein the memory (1201) is further configured to receive for each of the multiple power states (501, 502, 503, 504, 505, 506) of the virtual network function (315, 401, 402, 701, 705, 805) a respective power saving profile (1202) from NFV-MANO (803), and
wherein the controller (1203) is further configured in case the power saving profile (1202) for any one of the multiple power states does not exist in the memory (1201) to compile the power saving profile (1202) for the any one of the multiple power states.

12. The power management component (300, 801, 904, 1004, 1104) of claim 11, wherein the memory (1201) is configured to individually store, for each of a plurality of virtual network functions (315, 401, 402, 701, 705, 805), a power saving profile (1202) for each of multiple power states (501, 502, 503, 504, 505, 506) of the virtual network function (315, 401, 402, 701, 705, 805).

13. A method for power management of a virtual network function (315, 401, 402, 701, 705, 805), comprising:
storing, for a virtual network function (315, 401, 402, 701, 705, 805), a power saving profile (1202) for each of multiple power states (501, 502, 503, 504, 505, 506) of the virtual network function (315, 401, 402, 701, 705, 805)
wherein, for each power state (501, 502, 503, 504, 505, 506), the power saving profiles (1202) indicates
- an amount of physical data processing resources (215) to be used by the virtual network function (315, 401, 402, 701, 705, 805) in the power state (501, 502, 503, 504, 505, 506),
- an amount of virtualization containers (VMs and OS containers) (212, 214) deployed on the physical resources (215) to be used by the virtual network function (315, 401, 402, 701, 705, 805) in the power state (501, 502, 503, 504, 505, 506),
- a service capacity of a network function running on the virtualization containers to be provided in the power state (501, 502, 503, 504, 505, 506); and
selecting one of the power states (501, 502, 503, 504, 505, 506) for the virtual network function (315, 401, 402, 701, 705, 805); and
controlling the virtual network function (315, 401, 402, 701, 705, 805) to switch from a first power state (501, 502, 503, 504, 505, 506) to a second power state (501, 502, 503, 504, 505, 506); and
storing operation state information about the virtual network function (315, 401, 402, 701, 705, 805) upon controlling the virtual network function (315, 401, 402, 701, 705, 805) to switch from the first power state (501, 502, 503, 504, 505, 506) to the second power state (501, 502, 503, 504, 505, 506); and
configuring the virtual network function (315, 401, 402, 701, 705, 805) taking into account the stored operation state information upon controlling the virtual network function (315, 401, 402, 701, 705, 805) to switch from the second power state (501, 502, 503, 504, 505, 506) to a selected power state (501, 502, 503, 504, 505, 506); and
controlling the virtual network function (315, 401, 402, 701, 705, 805) to operate according to the power saving profile (1202) stored for the selected power state (501, 502, 503, 504, 505, 506).

## Patentansprüche

1. Eine Energieverwaltungskomponente (300, 801, 904, 1004, 1104), aufweisend:
einen Speicher (1201), der so konfiguriert ist, dass er für eine virtuelle Netzwerkfunktion (315, 401, 402, 701, 705, 805) ein Energiesparprofil (1202) für jeden von mehreren Leistungszuständen (501, 502, 503, 504, 505, 506) der virtuellen Netzwerkfunktion (315, 401, 402, 701, 705, 805)
wobei für jeden Leistungszustand (501, 502, 503, 504, 505, 506) das Energiesparprofil (1202) angibt
- eine Menge an physischen Datenverarbeitungsressourcen (215), die von der virtuellen Netzwerkfunktion (315, 401, 402, 701, 705, 805) im Leistungszustand (501, 502, 503, 504, 505, 506) verwendet werden sollen,
- eine Anzahl von Virtualisierungscontainern (212, 214), die auf den physischen Ressourcen (215) bereitgestellt werden und von der virtuellen Netzwerkfunktion (315, 401, 402, 701, 705, 805) in dem Leistungszustand (501, 502, 503, 504, 505, 506) verwendet werden sollen und
- eine Dienstkapazität einer Netzwerkfunktion, die auf den Virtualisierungscontainern (212, 214) ausgeführt wird und im Leistungszustand (501, 502, 503, 504, 505, 506) bereitgestellt werden soll; und
eine Steuereinrichtung (1203), die konfiguriert ist
- zum Auswählen eines der Leistungszustände (501, 502, 503, 504, 505, 506) für die virtuelle Netzwerkfunktion (315, 401, 402, 701, 705, 805) und
- die virtuelle Netzwerkfunktion (315, 401, 402, 701, 705, 805) so zu steuern, dass sie von einem ersten Leistungszustand (501, 502, 503, 504, 505, 506) in einen zweiten Leistungszustand (501, 502, 503, 504, 505, 506) wechselt, und
- zum Speichern von Betriebszustandsinformationen über die virtuelle Netzwerkfunktion (315, 401, 402, 701, 705, 805) bei der Steuerung der virtuellen Netzwerkfunktion (315, 401, 402, 701, 705, 805) zum Umschalten vom ersten Leistungszustand (501, 502, 503, 504, 505, 506) in den zweiten Leistungszustand (501, 502, 503, 504, 505, 506), und
- zum Konfigurieren der virtuellen Netzwerkfunktion (315, 401, 402, 701, 705, 805) unter Berücksichtigung der gespeicherten Betriebszustandsinformationen bei der Steuerung der virtuellen Netzwerkfunktion (315, 401, 402, 701, 705, 805), um von dem zweiten Leistungszustand (501, 502, 503, 504, 505, 506) in einen ausgewählten Leistungszustand (501, 502, 503, 504, 505, 506) zu schalten, und
- die virtuelle Netzwerkfunktion (315, 401, 402, 701, 705, 805) so zu steuern, dass sie gemäß dem für den ausgewählten Leistungszustand (501, 502, 503, 504, 505, 506) gespeicherten Energiesparprofil (1202) arbeitet.

2. Die Energieverwaltungskomponente (300, 801, 904, 1004, 1104) nach Anspruch 1, aufweisend eine Eingabeschnittstelle, die so konfiguriert ist, dass sie Informationen empfängt, die anzeigen, dass der Leistungszustand (501, 502, 503, 504, 505, 506) der virtuellen Netzwerkfunktion (315, 401, 402, 701, 705, 805) geändert werden soll, wobei die Steuereinrichtung (1203) so konfiguriert ist, dass sie in Reaktion auf den Empfang der Informationen einen der Leistungszustände (501, 502, 503, 504, 505, 506) auswählt und die virtuelle Netzwerkfunktion (315, 401, 402, 701, 705, 805) so steuert, dass sie gemäß dem arbeitet für den ausgewählten Leistungszustand (501, 502, 503, 504, 505, 506) gespeicherten Energiesparprofil (1202) arbeitet.

3. Die Energieverwaltungskomponente (300, 801, 904, 1004, 1104) nach Anspruch 2, wobei die Informationen eine Anforderung zum Ändern des Leistungszustands (501, 502, 503, 504, 505, 506) von einem aktuellen Zustand (501, 502, 503, 504, 505, 506) sind.

4. Die Energieverwaltungskomponente (300, 801, 904, 1004, 1104) gemäß Anspruch 2 oder 3, wobei die Informationen Informationen über einen Energieverbrauch der virtuellen Netzwerkfunktion (315, 401, 402, 701, 705, 805) aufweisen.

5. Die Energieverwaltungskomponente (300, 801, 904, 1004, 1104) nach einem der Ansprüche 1 bis 4, wobei jedes Energiesparprofil (1202) einen Stromverbrauch eines Betriebs der virtuellen Netzwerkfunktion (315, 401, 402, 701, 705, 805) gemäß dem Energiesparprofil (1202) angibt.

6. Die Energieverwaltungskomponente (300, 801, 904, 1004, 1104) nach einem der Ansprüche 1 bis 5, wobei jedes Energiesparprofil (1202) ferner eine Anzahl von Virtuelle-Netzwerkfunktion-Komponenten (702, 704) der virtuellen Netzwerkfunktion (315, 401, 402, 701, 705, 805) angibt, die im Energiesparprofil (1202) betrieben werden sollen.

7. Die Energieverwaltungskomponente (300, 801, 904, 1004, 1104) nach einem der Ansprüche 1 bis 6, wobei die Steuereinrichtung (1203) so konfiguriert ist, dass sie einen Energieverbrauch für jedes der Energiesparprofile (1202) auf der Grundlage von Energieverbrauchsmessungen bestimmt.

8. Die Energieverwaltungskomponente (300, 801, 904, 1004, 1104) nach Anspruch 7, wobei die Steuereinrichtung (1203) so konfiguriert ist, dass sie für jedes Energiesparprofil (1202) den ermittelten Stromverbrauch in das Energiesparprofil (1202) aufnimmt.

9. Die Energieverwaltungskomponente (300, 801, 904, 1004, 1104) nach Anspruch 7 oder 8, wobei die Energieverwaltungskomponente (300, 801, 904, 1004, 1104) so konfiguriert ist, dass sie den Energiestatus (501, 502, 503, 504, 505, 506) unter Berücksichtigung der ermittelten Leistungsaufnahmen auswählt.

10. Die Energieverwaltungskomponente (300, 801, 904, 1004, 1104) der Ansprüche 1 bis 9, wobei die Steuereinrichtung (1203) so konfiguriert ist, dass sie die virtuelle Netzwerkfunktion (315, 401, 402, 701, 705, 805) gemäß den gespeicherten Betriebszustandsinformationen konfiguriert, sofern das für den ausgewählten Leistungszustand (501, 502, 503, 504, 505, 506) gespeicherte Energiesparprofil (1202) dies zulässt.

11. Die Energieverwaltungskomponente (300, 801, 904, 1004, 1104) nach Anspruch 1 bis 10,
wobei der Speicher (1201) ferner so konfiguriert ist, dass er für jeden der mehreren Leistungszustände (501, 502, 503, 504, 505, 506) der virtuellen Netzwerkfunktion (315, 401, 402, 701, 705, 805) ein jeweiliges Energiesparprofil (1202) von NFV-MANO (803) empfängt, und
wobei die Steuereinrichtung (1203) ferner so konfiguriert ist, dass sie für den Fall, dass das Energiesparprofil (1202) für irgendeinen der mehreren Leistungszustände nicht im Speicher (1201) vorhanden ist, das Energiesparprofil (1202) für einen der mehreren Leistungszustände kompiliert.

12. Die Energieverwaltungskomponente (300, 801, 904, 1004, 1104) nach Anspruch 11, wobei der Speicher (1201) so konfiguriert ist, dass er für jede einer Mehrzahl von virtuellen Netzwerkfunktionen (315, 401, 402, 701, 705, 805) ein Energiesparprofil (1202) für jeden der mehreren Leistungszustände (501, 502, 503, 504, 505, 506) der virtuellen Netzwerkfunktion (315, 401, 402, 701, 705, 805) individuell speichert.

13. Verfahren zur Energieverwaltung einer virtuellen Netzwerkfunktion (315, 401, 402, 701, 705, 805), aufweisend:
Speichern für eine virtuelle Netzwerkfunktion (315, 401, 402, 701, 705, 805) eines Energiesparprofils (1202) für jeden von mehreren Leistungszuständen (501, 502, 503, 504, 505, 506) der virtuellen Netzwerkfunktion (315, 401, 402, 701, 705, 805) wobei für jeden Leistungszustand (501, 502, 503, 504, 505, 506) das Energiesparprofil (1202) angibt
- eine Menge an physischen Datenverarbeitungsressourcen (215), die von der virtuellen Netzwerkfunktion (315, 401, 402, 701, 705, 805) im Leistungszustand (501, 502, 503, 504, 505, 506) verwendet werden sollen,
- eine Anzahl von Virtualisierungscontainern (VMs und OS-Containern) (212, 214), die auf den physischen Ressourcen (215) bereitgestellt werden und von der virtuellen Netzwerkfunktion (315, 401, 402, 701, 705, 805) im Leistungszustand (501, 502, 503, 504, 505, 506) verwendet werden sollen,
- eine Dienstkapazität einer Netzwerkfunktion, die auf den Virtualisierungcontainern ausgeführt wird und im Leistungszustand (501, 502, 503, 504, 505, 506) bereitgestellt werden soll; und
Auswählen eines der Leistungszustände (501, 502, 503, 504, 505, 506) für die virtuelle Netzwerkfunktion (315, 401, 402, 701, 705, 805); und
Steuern der virtuellen Netzwerkfunktion (315, 401, 402, 701, 705, 805), um von einem ersten Leistungszustand (501, 502, 503, 504, 505, 506) zu einem zweiten Leistungszustand (501, 502, 503, 504, 505, 506) zu schalten; und
Speichern von Betriebszustandsinformationen über die virtuelle Netzwerkfunktion (315, 401, 402, 701, 705, 805) bei der Steuerung der virtuellen Netzwerkfunktion (315, 401, 402, 701, 705, 805) vom ersten Leistungszustand (501, 502, 503, 5 04, 505, 506) in den zweiten Leistungszustand (501, 502, 503, 504, 505, 506) umzuschalten; und
Konfigurieren der virtuellen Netzwerkfunktion (315, 401, 402, 701, 705, 805) unter Berücksichtigung der gespeicherten Betriebszustandsinformationen bei der Steuerung der virtuellen Netzwerkfunktion (315, 401, 402, 701, 705, 805), um von dem zweiten Leistungszustand (501, 502, 503, 504, 505, 506) in einen ausgewählten Leistungszustand (501, 502, 503, 504, 505, 506) umzuschalten; und
Steuern der virtuellen Netzwerkfunktion (315, 401, 402, 701, 705, 805), sodass sie gemäß dem für den ausgewählten Leistungszustand (501, 502, 503, 504, 505, 506) gespeicherten Energiesparprofil (1202) arbeitet.

## Revendications

1. Composant de gestion d'alimentation (300, 801, 904, 1004, 1104), comprenant :
une mémoire (1201) configurée pour stocker, pour une fonction de réseau virtuelle (315, 401, 402, 701, 705, 805), un profil d'économie d'énergie (1202) pour chacun des multiples états d'alimentation (501, 502, 503, 504, 505, 506) de la fonction de réseau virtuelle (315, 401, 402, 701, 705, 805),
dans lequel, pour chaque état d'alimentation (501, 502, 503, 504, 505, 506), les profils d'économie d'énergie (1202) indiquent :
- une quantité de ressources de traitement de données physiques (215) à utiliser par la fonction de réseau virtuelle (315, 401, 402, 701, 705, 805) dans l'état d'alimentation (501, 502, 503, 504, 505, 506),
- une quantité de conteneurs de virtualisation (212, 214) déployés sur les ressources physiques (215) à utiliser par la fonction de réseau virtuelle (315, 401, 402, 701, 705, 805) dans l'état d'alimentation (501, 502, 503, 504, 505, 506) et
- une capacité de service d'une fonction de réseau s'exécutant sur les conteneurs de virtualisation (212, 214) à fournir dans l'état d'alimentation (501, 502, 503, 504, 505, 506) ; et
un contrôleur (1203) configuré
- pour sélectionner l'un des états d'alimentation (501, 502, 503, 504, 505, 506) pour la fonction de réseau virtuelle (315, 401, 402, 701, 705, 805), et
- pour commander la fonction de réseau virtuelle (315, 401, 402, 701, 705, 805) pour passer d'un premier état d'alimentation (501, 502, 503, 504, 505, 506) à un deuxième état d'alimentation (501, 502, 503, 504, 505, 506), et
- pour stocker des informations d'état de fonctionnement concernant la fonction de réseau virtuelle (315, 401, 402, 701, 705, 805) lors de la commande de la fonction de réseau virtuelle (315, 401, 402, 701, 705, 805) pour passer du premier état d'alimentation (501, 502, 503, 504, 505, 506) au deuxième état d'alimentation (501, 502, 503, 504, 505, 506), et
- pour configurer la fonction de réseau virtuelle (315, 401, 402, 701, 705, 805) en tenant compte des informations d'état de fonctionnement stockées lors de la commande de la fonction de réseau virtuelle (315, 401, 402, 701, 705, 805) pour passer du deuxième état d'alimentation (501, 502, 503, 504, 505, 506) à un état d'alimentation sélectionné (501, 502, 503, 504, 505, 506), et
- pour commander la fonction de réseau virtuelle (315, 401, 402, 701, 705, 805) pour fonctionner conformément au profil d'économie d'énergie (1202) stocké pour l'état d'alimentation sélectionné (501, 502, 503, 504, 505, 506).

2. Composant de gestion d'alimentation (300, 801, 904, 1004, 1104) selon la revendication 1, comprenant une interface d'entrée configurée pour recevoir des informations indiquant que l'état d'alimentation (501, 502, 503, 504, 505, 506) de la fonction de réseau virtuelle (315, 401, 402, 701, 705, 805) doit être modifié, dans lequel le contrôleur (1203) est configuré pour sélectionner l'un des états d'alimentation (501, 502, 503, 504, 505, 506) et commande la fonction de réseau virtuelle (315, 401, 402, 701, 705, 805) pour fonctionner conformément au profil d'économie d'énergie (1202) stocké pour l'état d'alimentation sélectionné (501, 502, 503, 504, 505, 506) en réponse à la réception des informations.

3. Composant de gestion d'alimentation (300, 801, 904, 1004, 1104) selon la revendication 2, dans lequel les informations sont une demande de modification de l'état d'alimentation (501, 502, 503, 504, 505, 506) à partir d'un état actuel (501, 502, 503, 504, 505, 506).

4. Composant de gestion d'alimentation (300, 801, 904, 1004, 1104) selon la revendication 2 ou 3, dans lequel les informations comprennent des informations sur une consommation d'énergie de la fonction de réseau virtuelle (315, 401, 402, 701, 705, 805).

5. Composant de gestion d'alimentation (300, 801, 904, 1004, 1104) selon l'une quelconque des revendications 1 à 4, dans lequel chaque profil d'économie d'énergie (1202) indique une consommation d'énergie d'un fonctionnement de la fonction de réseau virtuelle (315, 401, 402, 701, 705, 805) conformément au profil d'économie d'énergie (1202).

6. Composant de gestion d'alimentation (300, 801, 904, 1004, 1104) selon l'une quelconque des revendications 1 à 5, dans lequel chaque profil d'économie d'énergie (1202) spécifie en outre un nombre de composants de fonction de réseau virtuelle (702, 704) de la fonction de réseau virtuelle (315, 401, 402, 701, 705, 805) à faire fonctionner dans le profil d'économie d'énergie (1202).

7. Composant de gestion d'alimentation (300, 801, 904, 1004, 1104) selon l'une quelconque des revendications 1 à 6, dans lequel le contrôleur (1203) est configuré pour déterminer une consommation d'énergie pour chacun des profils d'économie d'énergie (1202) sur la base de mesures de consommation d'énergie.

8. Composant de gestion d'alimentation (300, 801, 904, 1004, 1104) selon la revendication 7, dans lequel le contrôleur (1203) est configuré pour inclure, pour chaque profil d'économie d'énergie (1202), la consommation d'énergie déterminée dans le profil d'économie d'énergie (1202).

9. Composant de gestion d'alimentation (300, 801, 904, 1004, 1104) selon la revendication 7 ou 8, dans lequel le composant de gestion d'alimentation (300, 801, 904, 1004, 1104) est configuré pour sélectionner l'état d'alimentation (501, 502, 503, 504, 505, 506) en tenant compte des consommations d'énergie déterminées.

10. Composant de gestion d'alimentation (300, 801, 904, 1004, 1104) selon la revendication 1 à 9, dans lequel le contrôleur (1203) est configuré pour configurer la fonction de réseau virtuelle (315, 401, 402, 701, 705, 805) conformément aux informations d'état de fonctionnement stockées dans la mesure où le profil d'économie d'énergie (1202) stocké pour l'état d'alimentation sélectionné (501, 502, 503, 504, 505, 506) le permet.

11. Composant de gestion d'alimentation (300, 801, 904, 1004, 1104) selon la revendication 1 à 10, dans lequel la mémoire (1201) est en outre configurée pour recevoir, pour chacun des multiples états d'alimentation (501, 502, 503, 504, 505, 506) de la fonction de réseau virtuelle (315, 401, 402, 701, 705, 805) un profil d'économie d'énergie respectif (1202) provenant de NFV-MANO (803), et
dans lequel le contrôleur (1203) est en outre configuré, dans le cas où le profil d'économie d'énergie (1202) pour l'un quelconque des multiples états d'alimentation n'existe pas dans la mémoire (1201), pour compiler le profil d'économie d'énergie (1202) pour l'un quelconque des multiples états d'alimentation.

12. Composant de gestion d'alimentation (300, 801, 904, 1004, 1104) selon la revendication 11, dans lequel la mémoire (1201) est configurée pour stocker individuellement, pour chacune d'une pluralité de fonctions de réseau virtuelles (315, 401, 402, 701, 705, 805), un profil d'économie d'énergie (1202) pour chacun des multiples états d'alimentation (501, 502, 503, 504, 505, 506) de la fonction de réseau virtuelle (315, 401, 402, 701, 705, 805).

13. Procédé de gestion d'alimentation d'une fonction de réseau virtuelle (315, 401, 402, 701, 705, 805), comprenant :
le stockage, pour une fonction de réseau virtuelle (315, 401, 402, 701, 705, 805), d'un profil d'économie d'énergie (1202) pour chacun des multiples états d'alimentation (501, 502, 503, 504, 505, 506) de la fonction de réseau virtuelle (315, 401, 402, 701, 705, 805),
dans lequel, pour chaque état d'alimentation (501, 502, 503, 504, 505, 506), les profils d'économie d'énergie (1202) indiquent
- une quantité de ressources de traitement de données physiques (215) à utiliser par la fonction de réseau virtuelle (315, 401, 402, 701, 705, 805) dans l'état d'alimentation (501, 502, 503, 504, 505, 506),
- une quantité de conteneurs de virtualisation (machines virtuelles et conteneurs de système d'exploitation) (212, 214) déployés sur les ressources physiques (215) à utiliser par la fonction de réseau virtuelle (315, 401, 402, 701, 705, 805) dans l'état d'alimentation (501, 502, 503, 504, 505, 506)
- une capacité de service d'une fonction de réseau s'exécutant sur les conteneurs de virtualisation à fournir dans l'état d'alimentation (501, 502, 503, 504, 505, 506) ; et
la sélection de l'un des états d'alimentation (501, 502, 503, 504, 505, 506) pour la fonction de réseau virtuelle (315, 401, 402, 701, 705, 805) ; et
la commande de la fonction de réseau virtuelle (315, 401, 402, 701, 705, 805) pour passer d'un premier état d'alimentation (501, 502, 503, 504, 505, 506) à un deuxième état d'alimentation (501, 502, 503, 504, 505, 506) ; et
le stockage des informations d'état de fonctionnement concernant la fonction de réseau virtuelle (315, 401, 402, 701, 705, 805) lors de la commande de la fonction de réseau virtuelle (315, 401, 402, 701, 705, 805) pour passer du premier état d'alimentation (501, 502, 503, 504, 505, 506) au deuxième état d'alimentation (501, 502, 503, 504, 505, 506) ; et
la configuration de la fonction de réseau virtuelle (315, 401, 402, 701, 705, 805) en tenant compte des informations d'état de fonctionnement stockées lors de la commande de la fonction de réseau virtuelle (315, 401, 402, 701, 705, 805) pour passer du deuxième état d'alimentation (501, 502, 503, 504, 505, 506) à un état d'alimentation sélectionné (501, 502, 503, 504, 505, 506) ; et
la commande de la fonction de réseau virtuelle (315, 401, 402, 701, 705, 805) pour fonctionner conformément au profil d'économie d'énergie (1202) stocké pour l'état d'alimentation sélectionné (501, 502, 503, 504, 505, 506).
